# EUROPÄISCHE PATENTSCHRIFT

(11) **EP 3 204 253 B1**
(45) Veröffentlichungstag und Bekanntmachung des Hinweises auf die Patenterteilung: **10.04.2019**
(21) Anmeldenummer: 15759403.7
(22) Anmeldetag: 17.08.2015
(51) Int. Cl.: B60K 26/02, G05G 1/00, G05G 1/30

(54) **FAHRPEDALMODUL MIT HAPTISCHER SIGNALGEBUNG**
ACCELERATOR PEDAL MODULE WITH HAPTIC SIGNALING
MODULE DE PÉDALE D'ACCÉLÉRATEUR À ÉMISSION DE SIGNAUX HAPTIQUES

(30) Priorität: 09.10.2014 DE 102014220460
(43) Veröffentlichungstag der Anmeldung: 16.08.2017
(73) Patentinhaber: Robert Bosch GmbH, 70442 Stuttgart (DE)
(72) Erfinder: GERUNDT, Oliver, 71292 Friolzheim (DE); GLEMSER, Ralph, 74336 Brackenheim-Meimsheim (DE); STARY, Petr, 37382 Borsov nad Vltavou (CZ); SIEBER, Udo, 74321 Bietigheim (DE)
(86) Internationale Anmeldenummer: PCT/EP2015/068832
(87) Internationale Veröffentlichungsnummer: WO 2016/055204

(56) Entgegenhaltungen:
- DE-A1-102011 081 071
- DE-A1-102012 212 676
- JP-A- 2007 204 012

## Beschreibung

### Gebiet der Erfindung

Die Erfindung betrifft ein Fahrpedalmodul mit haptischer Signalgebung für ein Kraftfahrzeug.

### Hintergrund der Erfindung

In modernen Kraftfahrzeugen ist in der Regel eine Vielzahl von Überwachungsvorrichtungen zur Überwachung verschiedener Betriebsparameter, wie beispielsweise einem Motorölstand, einem Motoröldruck, einem Tankfüllstand und/oder einer Kühlwassertemperatur, verbaut. Meist verfügen derartige Überwachungsvorrichtungen auch über eine entsprechende Signalgebervorrichtung, welche bei Über- oder Unterschreiten eines Wertes eines Betriebsparameters ein optisches und/oder akustisches Warnsignal an einen Fahrer des Kraftfahrzeugs ausgeben kann. Mitunter kann es jedoch vorkommen, dass der Fahrer, etwa aufgrund zusätzlicher optischer und/oder akustischer Reize, ein Warnsignal nicht oder nicht rechtzeitig wahrnimmt.

Während des Betriebes des Kraftfahrzeuges betätigt der Fahrer in der Regel ein Fahrpedal bzw. Gaspedal des Kraftfahrzeugs. Das Fahrpedal kann daher einen Kommunikationskanal bzw. eine Schnittstelle zwischen dem Kraftfahrzeug und dem Fahrer bereitstellen, über welche haptische Signale zuverlässig wahrnehmbar an den Fahrer übermittelt werden können.

Insgesamt können haptische Meldungen bzw. Signale schneller von dem Fahrer erfasst werden und eine Akzeptanz kann höher als etwa bei optischen und/oder akustischen Signalen sein. Ein aktives Fahrpedal mit haptischer Signalgebung kann daher neue Möglichkeiten bieten, den Fahrer vor Gefahren zu warnen und/oder dabei zu unterstützen, möglichst verbrauchsgünstig zu fahren. Mithin kann dieser Kommunikationskanal den Fahrer befähigen, Potenziale weiterer Fahrerassistenzsysteme für Verkehrssicherheit und/oder einen reduzierten Kraftstoffverbrauch ganz auszuschöpfen.

Zur haptischen Signalgebung an einem Fahrpedal werden häufig Stellelemente genutzt, welche beispielsweise mithilfe eines an einer Karosserie des Kraftfahrzeugs abgestützten Aktuators aktuiert werden und an dem Fahrpedal angreifen.

Ein elektromechanisch aktuierter Signalgeber für ein Fahrtreglerpedal eines Kraftfahrzeugs ist aus der DE 296 12 273 U1 bekannt.

Aus der DE 10 2011 081 071 A1 ist eine aktive Fahrpedaleinheit für Kraftfahrzeuge bekannt, die einen elektromechanischen Aktuator zur Übermittlung haptischer Informationen aufweist und die Merkmale des Oberbegriffs des Anspruchs 1 zeigt.

Aus der DE 10 2012 212 676 A1 ist ein Fahrzeugpedal mit haptischer Rückmeldung bekannt.

Aus der JP 2007 204012 A ist ein weiteres Fahrpedal mit haptischer Rückmeldung bekannt.

### Offenbarung der Erfindung

Ausführungsformen der vorliegenden Erfindung können in vorteilhafter Weise ermöglichen, ein kompaktes und robustes Fahrpedalmodul mit haptischer Signalgebung für ein Kraftfahrzeug, wie etwa einen Pkw, einen Lkw, einen Bus oder einen Zug, bereitzustellen.

Gemäß einem Aspekt der Erfindung wird ein Fahrpedalmodul für ein Kraftfahrzeug vorgeschlagen. Das Fahrpedalmodul weist eine Pedaleinheit mit einem von einem Fahrer des Kraftfahrzeugs betätigbaren Pedalhebel auf, welcher an einem ersten Ende eine Pedalplatte aufweist und welcher an einem dem ersten Ende gegenüberliegenden zweiten Ende um eine Drehachse drehbar gelagert ist. Weiter weist das Fahrpedalmodul eine Signalgebervorrichtung an dem ersten Ende zur haptischen Signalgebung an den Fahrer und einen Aktuator zum Betätigen der Signalgebervorrichtung auf. Das Fahrpedalmodul zeichnet sich insbesondere dadurch aus, dass der Aktuator an dem Pedalhebel gehalten ist, der Aktuator und die Signalgebervorrichtung räumlich voneinander getrennt sind und der Aktuator über eine starre mechanische Kopplungsvorrichtung mit der Signalgebervorrichtung gekoppelt ist, wobei der Aktuator von der Drehachse weniger beabstandet ist als die Signalgebervorrichtung.

Ideen zu Ausführungsformen der vorliegenden Erfindung können unter anderem als auf den nachfolgend beschriebenen Gedanken und Erkenntnissen beruhend angesehen werden. Bisher bekannte Fahrpedale mit haptischer Signalgebung, sogenannte aktive Fahrpedale, können im Vergleich zu einem passiven Pedal zusätzlichen Bauraum für die Signalgebervorrichtung und/oder den Aktuator benötigen. Außerdem kann ein Gewicht der Signalgebervorrichtung und/oder des Aktuators Trägheitseigenschaften des Fahrpedals beeinflussen. Dadurch kann auch ein haptischer Eindruck in einem passiven Betätigungsmodus verändert sein und/oder das Fahrpedal, insbesondere die Pedaleinheit mit Pedalhebel, kann einer erhöhten mechanischen Belastung ausgesetzt sein. Auch kann ein dynamisches Verhalten des Fahrpedals, wie etwa eine Rückstellzeit, negativ beeinflusst sein.

Durch die erfindungsgemäße Ausgestaltung des Fahrpedalmoduls, bei welchem lediglich die Signalgebervorrichtung unter der Pedalplatte angeordnet ist und der Aktuator bzw. die Antriebseinheit räumlich von der Signalgebervorrichtung getrennt und in Richtung der Drehachse des Pedalhebels verlagert ist, kann eine Trägheitszunahme und/oder eine mechanische Belastung des Pedalhebels reduziert sein. Zugleich kann dadurch eine Schwingbelastung der Pedaleinheit, insbesondere des Pedalhebels, reduziert sein. Dies kann z.B. auf das geringere Drehmoment infolge des verringerten Hebelarms zwischen dem Masseschwerpunkt des Aktuators und der Drehachse zurückgeführt werden. Durch die vorgeschlagene Anordnung wird auch der Drehimpuls beim Verstellen des Pedalhebels geringer, so dass gegenüber anderen Anordnungen weniger Bewegungsenergie des Fahrers in die Bewegung der Masse des Aktuators eingebracht werden muss. Das Trägheitsmoment des Fahrpedals nimmt ab und erlaubt so eine leichter ansprechende Verstellung des Fahrpedals.

Der Aktuator kann dabei außenseitig an dem Pedalhebel gehalten bzw. angeordnet sein, teilweise in dem Pedalhebel aufgenommen sein oder vollständig in dem Pedalhebel integriert sein, ohne dass eine Außenabmessung und/oder eine Außenkontur und/oder ein Außenumfang des Pedalhebels vergrößert werden müsste.

Die "starre mechanische Kopplungsvorrichtung" kann hier und im Folgenden eine mechanische Kopplung des Aktuators mit der Signalgebervorrichtung bezeichnen, welche derart starr ist, dass wenigstens 70%, vorzugsweise wenigstens 90%, einer durch den Aktuator bewirkten Kraft über die Kopplungsvorrichtung auf die Signalgebervorrichtung übertragen werden und nur ein geringfügiger Betrag der bewirkten Kraft beispielsweise in eine elastische Deformation der Kopplungsvorrichtung übergeführt wird.

Gemäß der Erfindung ist ein Abstand zwischen dem Aktuator und einer Ebene, welche durch die Drehachse und parallel zu einer Grundfläche eines Pedalkörpers der Pedaleinheit verläuft, kleiner als ein Abstand zwischen dem Aktuator und der Signalgebervorrichtung. Die Grundfläche bezeichnet eine Fläche des Fahrpedalmoduls, mit welcher das Fahrpedalmodul beispielsweise an eine Karosserie des Kraftfahrzeugs abgestützt ist. Die jeweiligen Abstände können dabei jeweils von einer Außenkante und/oder einer Außenfläche des Aktuators bzw. der Signalgebervorrichtung bemessen sein. Mit anderen Worten sind Signalgebervorrichtung und Aktuator erheblich räumlich voneinander getrennt an der Pedaleinheit angeordnet, so dass der Aktuator näher an der Drehachse angeordnet ist als die Signalgebervorrichtung zum Aktuator. Dadurch kann die aufgrund eines Eigengewichts des Aktuators auf den Pedalhebel wirkende mechanische Belastung weiter reduziert sein.

Gemäß einer Ausführungsform weist die Kopplungsvorrichtung eine Welle und/oder einen Dickdraht und/oder ein Stabelement auf. Derartige Kopplungselemente können kostengünstig produziert sein und eine lange Lebensdauer mit nur geringfügigen Verschleißerscheinungen über die Lebensdauer aufweisen, so dass das Fahrpedalmodul insgesamt robust und zuverlässig ausgestaltet sein kann. Die Verwendung eines Dickdrahtes als Kopplungselement kann ferner den Vorteil haben, dass der Dickdraht bezüglich seiner Geometrie einer Kontur und/oder einem Verlauf des Pedalhebels angepasst werden kann und dennoch ausreichend starr ist, dass die von dem Aktuator bewirkte Kraft im Wesentlichen betragsgleich auf die Signalgebervorrichtung übertragen werden kann.

Gemäß einer Ausführungsform der Erfindung weist die Kopplungsvorrichtung einen Kniehebel auf, welcher an ein Signalelement der Signalgebervorrichtung gekoppelt ist und welcher derart mit dem Aktuator wirkverbunden ist, dass eine durch den Aktuator in einer ersten Richtung bewirkte Kraft in eine in einer von der ersten Richtung verschiedenen zweiten Richtung wirkende weitere Kraft umgelenkt wird. Mit anderen Worten kann durch den Kniehebel in vorteilhafter Weise die von dem Aktuator bewirkte Kraft in ihrer Richtung umgelenkt werden, so dass durch eine Wirkrichtung der weiteren Kraft an der Signalgebervorrichtung kaum Anforderungen an eine Position des Aktuators am Pedalhebel gestellt sind. Der Aktuator kann so an nahezu beliebiger Position an dem Pedalhebel angeordnet werden. So kann der Richtungsvektor der ersten Richtung beispielsweise z.B. einen Hauptanteil in der Richtung parallel zu der Pedalplatte aufweisen, also im Wesentlichen parallel zur Pedalplatte bzw. im Wesentlichen orthogonal zur Normalen auf die Pedalplatte verlaufen. Der Richtungsvektor der zweiten Richtung kann dann z.B. einen Hauptanteil entlang des Normalenvektors der Pedalplatte aufweisen, also im Wesentlichen parallel zum Normalenvektor verlaufen.

Gemäß einer Ausführungsform der Erfindung grenzt der Kniehebel an einer einer Trittfläche der Pedalplatte entgegengesetzt angeordneten Fläche der Pedalplatte an. Eine Wirkrichtung der über den Kniehebel an die Pedalplatte übertragenen Kraft kann so in einer definierten Richtung, vorzugsweise im Wesentlichen parallel zu einem Normalenvektor der Trittfläche, auf die Pedalplatte wirken. Dadurch kann eine Signalstärke des haptischen Signals optimiert und/oder maximiert sein.

Gemäß einer Ausführungsform der Erfindung weist der Aktuator einen rotatorischen und/oder linearen Antrieb auf. Ein rotatorischer und/oder linearer Antrieb kann insbesondere im Hinblick auf eine Baugröße vorteilhaft sein. Ferner können mit derartigen Antrieben eine Vielzahl von haptischen Signalen generiert werden, die sich beispielsweise bezüglich einer Frequenz, einer Frequenzfolge, eines Signalmusters und/oder einer Signalstärke unterscheiden können.

Gemäß einer Ausführungsform der Erfindung weist der Aktuator einen Elektromotor und/oder einen Elektromagneten auf. Dadurch kann ein robuster, zuverlässiger, kompakter und wartungsarmer Aktuator bereitgestellt sein.

Gemäß einer Ausführungsform der Erfindung weist die Signalgebervorrichtung ein relativ zum Pedalhebel verlagerbares und über den Aktuator an dem Pedalhebel abgestütztes Signalelement auf, welches dazu ausgeführt ist, ein für den Fahrer spürbares haptisches Signal zu erzeugen. Das Signalelement kann optional auch direkt an dem Pedalhebel und/oder einem Pedalkopf der Pedaleinheit und/oder der Pedalplatte abgestützt sein. Dadurch kann das Signalelement etwa vollständig in dem Pedalkopf integriert sein und muss nicht etwa an einer Karosserie des Kraftfahrzeugs abgestützt werden.

Gemäß einer Ausführungsform der Erfindung ist das Signalelement parallel und/oder orthogonal zu einem Normalenvektor einer Trittfläche der Pedalplatte verlagerbar. Dadurch kann das haptische Signal in vorteilhafter Weise in einer Trittrichtung des Fahrers, d.h. einer Richtung in welcher der Fahrer den Pedalhebel betätigt bzw. die Pedalplatte niederdrückt, und/oder orthogonal dazu wahrnehmbar sein.

Gemäß einer Ausführungsform der Erfindung weist das Signalelement eine Exzentermasse, eine Federplatte und/oder ein elastisches Element auf. Derartige Signalelemente können als leichte und kompakte Bauteile in dem Pedalkopf verbaut werden, ohne diesen durch Eigengewicht übermäßig zusätzlich zu belasten und/oder ohne dass der Pedalkopf bezüglich einer Außenkontur und/oder einem Außenumfang vergrößert werden müsste.

Gemäß einer Ausführungsform der Erfindung weist der Aktuator eine Antriebsachse auf, welche mit einem ersten Ende eines rotierbaren Kopplungselements der Kopplungsvorrichtung gekoppelt ist, wobei an einem dem ersten Ende gegenüberliegenden zweiten Ende des Kopplungselements eine Exzentermasse exzentrisch zur Antriebsachse angeordnet ist, wobei das zweite Ende des Kopplungselements an dem ersten Ende des Pedalhebels angeordnet ist. Eine derartige Ausgestaltung kann sich vorteilhaft auf Herstellungskosten des Fahrpedalmoduls auswirken sowie eine Zuverlässigkeit und/oder Robustheit erhöhen.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein Fahrpedalmodul gemäß einer Ausführungsform der Erfindung.
Fig. 2 und 3 zeigen jeweils einen Teil eines Fahrpedalmoduls gemäß weiteren Ausführungsformen der Erfindung.
Fig. 4A zeigt einen Aktuator und eine Kopplungsvorrichtung für ein Fahrpedalmodul gemäß einer Ausführungsform der Erfindung.
Fig. 4B zeigt eine Signalgebervorrichtung für ein Fahrpedalmodul gemäß einer Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

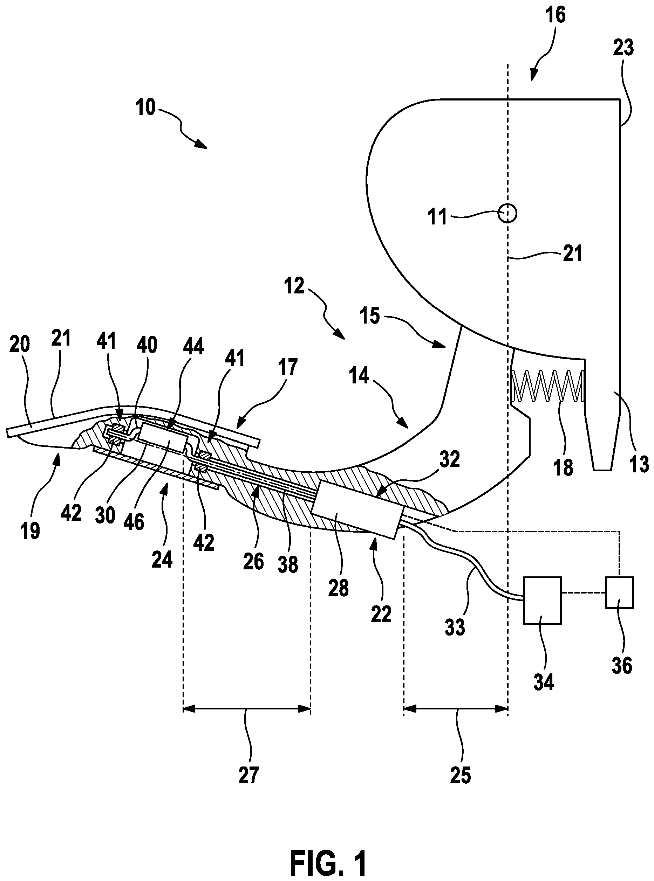

Fig. 1 zeigt ein Fahrpedalmodul 10 mit haptischer Signalgebung für ein Kraftfahrzeug gemäß einer Ausführungsform der Erfindung.

Das Fahrpedalmodul 10 weist eine Pedaleinheit 12 mit einem Pedalhebel 14 auf. Die Pedaleinheit 12 weist an einem Ende 15 einen Pedalkörper 16 auf, in welchem der Pedalhebel 14 drehbar bzw. schwenkbar um eine Drehachse 11 gelagert ist. Weiter verfügt die Pedaleinheit 12 über ein Rückstellfederelement 18, welches mit einem ersten Ende an einem Bereich des Pedalhebels 14 und mit einem dem ersten Ende gegenüberliegenden zweiten Ende an einem Gehäuse 13 der Pedaleinheit 12 abgestützt ist, so dass der Pedalhebel 14 in Richtung einer Ausgangslage vorgespannt ist. Das Rückstellfederelement 18 kann beispielsweise als Schrauben- oder Sprungfeder realisiert sein.

Weiter weist die Pedaleinheit 12 einen Pedalkopf 19 mit einer außenseitig daran angeordneten Pedalplatte 20 auf. Die Pedalplatte 20 weist eine außenseitig daran angeordnete Trittfläche 21 auf und ist an einem dem Ende 15 des Pedalhebels 14 bzw. dem Pedalkörper 16 gegenüberliegenden weiteren Ende 17 des Pedalhebels 14 angeordnet. Ein Fahrer des Kraftfahrzeuges kann so mit einem Körperglied, z.B. mit seinem Fuß oder seiner Hand, die Trittfläche 21 und die Pedalplatte 20 niederdrücken und damit den Pedalhebel 14 betätigen, wobei der Pedalhebel 14 entgegen einer durch das Rückstellfederelement 18 generierten Rückstellkraft aus der Ausgangslage bewegt werden kann und damit eine Antriebsleistung und/oder ein Drehmoment einer Antriebsmaschine des Kraftfahrzeugs gesteuert oder geregelt werden kann. Es sei angemerkt, dass der Fahrer prinzipiell auch in der Art eines mit Sensoren zur Erfassung von haptischen Signalen ausgestatteten Fahrroboters ausgestaltet sein kann.

Weiter weist das Fahrpedalmodul 10 einen Aktuator 22 und eine an dem weiteren Ende 17 des Pedalhebels 14 angeordnete Signalgebervorrichtung 24 auf. Der Aktuator 22 ist allgemein dazu ausgebildet, die Signalgebervorrichtung 24 zu betätigen, wobei eine von dem Aktuator 22 bewirkte Kraft über eine starre mechanische Kopplungsvorrichtung 26 an die Signalgebervorrichtung 24 übertragen wird. Die Signalgebervorrichtung 24 ist im Wesentlichen in dem Pedalkörper 19 unter der Pedalplatte 20 und/oder in dem Pedalhebel 14 integriert und dazu ausgelegt, bei Bestromung und/oder Aktivierung des Aktuators 22 ein haptisches für den Fahrer über dessen Gliedmaß, z.B. über seinen Fuß bzw. seine Hand, spürbares Signal zu erzeugen.

Der Aktuator 22 und die Signalgebervorrichtung 24 sind räumlich über die Kopplungsvorrichtung 26 voneinander getrennt an der Pedaleinheit 12 angeordnet, wobei der Aktuator 22 weniger von der Drehachse 11 beabstandet ist als die Signalgebervorrichtung 24. Ein Abstand 25 zwischen dem Aktuator 22 und einer Ebene 21, welche durch die Drehachse 11 und parallel zu einer Grundfläche 23 des Pedalkörpers 16 verläuft, ist dabei kleiner als ein Abstand 27 zwischen dem Aktuator 22 und der Signalgebervorrichtung 24. Die jeweiligen Abstände 25, 27 sind dabei jeweils von einer Außenkante und/oder einer Außenfläche des Aktuators 22 bzw. der Signalgebervorrichtung 24 bemessen. Unter Außenkante bzw. Außenfläche ist hierbei eine Kante bzw. eine Fläche zu verstehen, die den Aktuator bzw. die Signalgebervorrichtung als separates Bauelement betrachtet außen begrenzt. Dabei ist eine Außenkante bzw. Außenfläche in Bezug auf die Ebene 21 dadurch zu bestimmen, dass eine zu der Ebene 21 parallel Ebene durch die Außenkante bzw. die Außenfläche (oder ihren geometrischen Mittelpunkt) gelegt wird. Die Abstände werden dabei so bestimmt, dass der Abstand 27 zwischen dem Aktuator 22 und der Signalgebervorrichtung 24 z.B. durch die Distanz zwischen der Außenkante des Aktuators 22, die der Signalgebereinrichtung 24 zuweist, und der Außenkante der Signalgebereinrichtung 24, die dem Aktuator zuweist, gegeben ist. Der Abstand 25 zwischen dem Aktuator 22 und der Ebene 21 wird z.B. durch Distanz zwischen der der Ebene 21 zuweisenden Außenkante bzw. Außenfläche des Aktuators 22 und der Ebene 21 bestimmt. Für den Fall, dass die Außenkanten bzw. Außenflächen nicht klar abgegrenzt werden können kann alternativ auch der Masseschwerpunkt des Aktuators 22 bzw. der Signalgebereinrichtung 24 zur Bestimmung der Abstände 25, 27 verwendet werden.

Der Aktuator 22 kann etwa wenigstens 3 cm, insbesondere wenigstens 5 cm und vorzugsweise wenigstens 7 cm von der Pedalplatte 20 und/oder dem Pedalkopf 19 bzw. von der Signalgebereinrichtung 24 beabstandet sein. Durch die räumliche Trennung von Aktuator 22 und Signalgebervorrichtung 24 kann in vorteilhafter Weise eine Veränderung einer Trägheitseigenschaft und/oder eines dynamischen Verhaltens und/oder eine mechanische Belastung des Pedalhebels 14 durch ein Eigengewicht des Aktuators 22 gering gehalten werden. Der Abstand 25 zwischen dem Aktuator 22 und der Ebene 21 kann beispielsweise höchstens 5 cm (bei einem Abstand 27 von wenigstens 7 cm), insbesondere höchstens 2,5 cm und vorzugsweise höchstens 2cm betragen.

Der in Fig. 1 gezeigte Aktuator 22 weist einen Elektromotor 28 als rotatorischen Antrieb mit einer Antriebsachse 30 auf. Der Aktuator 22 kann außenseitig an dem Pedalhebel 14 mit einer Haltevorrichtung gehalten sein und/oder zumindest teilweise in einer Aufnahme 32 in dem Pedalhebel aufgenommen sein. Beispielsweise kann der Aktuator 22 in der Aufnahme 32 verklebt und/oder verschraubt und/oder verpresst sein. Auch kann der Aktuator 22 vollständig in den Pedalhebel 14 integriert sein. Über eine elektrische Leitung 33, welche zumindest teilweise durch den Pedalhebel 16 geführt sein kann, wird der Aktuator 22 mit elektrischem Strom aus einer Stromversorgungsvorrichtung 34 versorgt und angetrieben werden. Die Stromversorgungsvorrichtung 34 kann eine plasmagespritzte Stromzuführung, etwa mit einem spritzgegossenen Schaltungsträger ("Molded Interconnect Device", MID), und/oder eine Verbindung zu einem Kabelbaum des Kraftfahrzeugs aufweisen. Weiter kann der Aktuator 22 über eine Signalleitung, welche ebenfalls zumindest teilweise durch den Pedalhebel 14 geführt sein kann, mit einem Steuergerät 36 elektrisch verbunden sein, welches dazu ausgeführt sein kann, eine Ausgabe des haptischen Signals zu steuern. Das Steuergerät 36 kann Teil des Fahrpedalmoduls 10 sein oder eine entsprechende Steuerelektronik kann in ein bereits im Kraftfahrzeug vorhandenes Steuergerät 36 integriert sein.

Die Antriebsachse 30 des Aktuators 22 ist mit einem ersten Ende eines rotierbaren Kopplungselements 38 der Kopplungsvorrichtung 26 konzentrisch gekoppelt. Das Kopplungselement 38 kann etwa als Dickdraht, als Welle, als Stabelement und/oder als anderes starres mechanisches Kopplungselement ausgeführt sein. Ein dem ersten Ende des Kopplungselements 38 gegenüberliegendes zweites Ende weist einen U-förmig gebogenen Bereich 40 auf, wobei sich an jeden Schenkel des U-förmig gebogenen Bereichs 40 ein Lagerbereich 41 des Kopplungselements 38 anschließt, welcher jeweils konzentrisch zur Antriebsachse 30 des Aktuators 22 verläuft. Die Lagerbereiche 41 sind ferner jeweils in einem Lager 42 der Kopplungsvorrichtung 26 drehbar um die Antriebsachse 30 gelagert.

Zwischen den beiden Schenkeln des U-förmig gebogenen Bereichs 40 ist ein Signalelement 44 der Signalgebervorrichtung 24 angeordnet und/oder aufgenommen, welches relativ zu dem Pedalhebel 14 verlagerbar ist und über den Aktuator 22 und/oder die Kopplungsvorrichtung 26 an dem Pedalhebel 14 abgestützt ist. Das Signalelement 44 ist allgemein dazu ausgeführt, ein für den Fahrer spürbares haptisches Signal zu erzeugen. Bei dem in Fig. 1 gezeigten Ausführungsbeispiel weist das Signalelement 44 eine Exzentermasse 46 auf, welche beispielsweise als zwischen den Schenkeln des U-förmig gebogenen Bereichs 40 angeordnete Hülse und/oder Drahtwickel ausgeführt sein kann. Die Exzentermasse 46 ist somit zum einen durch den U-förmig gebogenen Bereich 40 fixiert und zum anderen exzentrisch zur Antriebsachse 30 des Aktuators 22 angeordnet.

Die Signalgebervorrichtung 24 und/oder die Kopplungsvorrichtung 26 und/oder weitere Komponenten des Fahrpedalmoduls 10 können etwa von einer Seite des Pedalkopfes 19 orthogonal zum Normalenvektor der Trittfläche 21 in dem Pedalkopf 19 montiert werden. Auch kann an einer der Pedalplatte 20 gegenüberliegenden Seite des Pedalkopfes 19 ein Deckel vorgesehen sein, über welchen Komponenten des Fahrpedalmoduls 10 in den Pedalkopf 19 und/oder den Pedalhebel 14 montiert werden können.

Ein haptisches Signal kann beispielsweise als Antwort auf ein Über- oder Unterschreiten eines Wertes eines Parameters, wie etwa einem Motoröldruck, einem Motorölfüllstand, einer Kühlwassertemperatur, einem Tankfüllstand und/oder eines beliebigen anderen Parameters durch das Steuergerät 36 initiiert werden. Auch kann ein haptisches Signal generiert werden, um dem Fahrer auf eine Möglichkeit zum Reduzieren eines Kraftstoffverbrauchs hinzuweisen, etwa durch Änderung einer Getriebeübersetzung.

Soll ein haptisches Signal an den Fahrer ausgegeben werden, so kann das Steuergerät 36 den Aktuator 22 über ein elektrisches Signal ansprechen und beispielsweise anweisen, einen Antrieb der Antriebsachse 30 mit einer definierbaren Rotationsfrequenz bereitzustellen. Auch kann über das Steuergerät 36 die Stromversorgungsvorrichtung 34 angewiesen werden, dem Aktuator 22 eine der definierbaren Rotationsfrequenz entsprechende Stromversorgung bzw. Bestromung des Aktuators 22 bereitzustellen. Eine Rotation des rotatorischen Antriebs des Aktuators 22 versetzt schließlich das Kopplungselement 38 und die Exzentermasse 46 der Signalgebervorrichtung 24 in Rotation. Aufgrund der exzentrischen Lage der Exzentermasse 46 erzeugt diese Schwingungen und/oder Vibrationen in dem Pedalkopf 19, welche wiederum zu einer Vibrationsbewegung der Pedalplatte 20 führen. Die Vibrationsbewegungen der Pedalplatte 20 sind dann als haptisches Signal für den Fahrer spürbar. Zusätzlich kann die Exzentermasse 46 während einer Rotation an wenigstens eine Innenfläche des Pedalkörpers, insbesondere an eine der Trittfläche 21 entgegengesetzt angeordneten Fläche der Pedalplatte 20, anstoßen bzw. diese streifen bzw. in Berührkontakt an dieser vorbeigleiten, so dass das haptische Signal weiter verstärkt sein kann. Die Bewegungen der Exzentermasse 46 können sowohl in einer Trittrichtung, d.h. parallel zu einem Normalenvektor auf die Trittfläche 21, als auch orthogonal dazu von dem Fahrer wahrnehmbar sein.

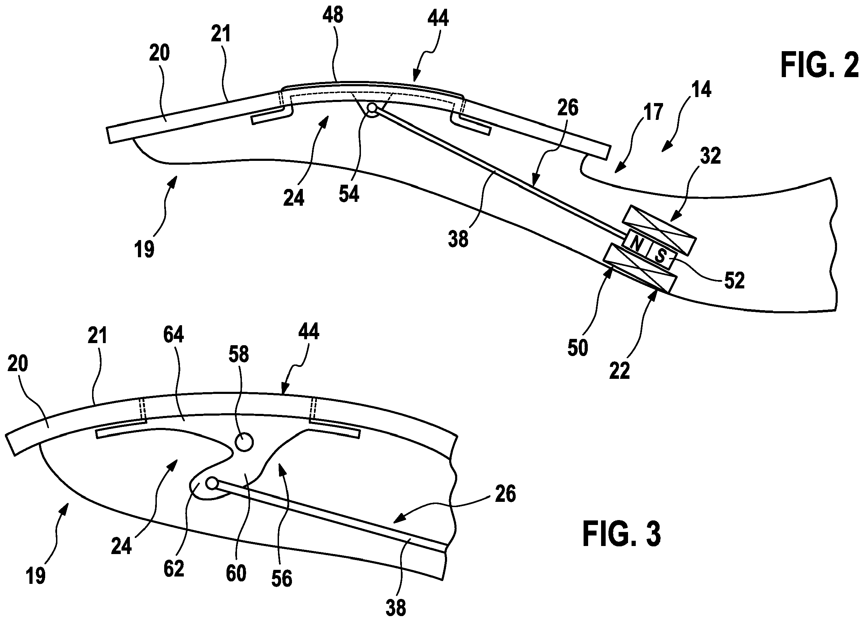

Fig. 2 zeigt einen Pedalhebel 14 mit Pedalkopf 19 und Pedalplatte 20 eines Fahrpedalmoduls 10 gemäß einer weiteren Ausführungsform der Erfindung.

Der in Fig. 2 gezeigte Aktuator 22 weist einen linearen Antrieb mit einem Elektromagneten 50 auf, welcher ein Magnetelement 52 bei Bestromung des Elektromagneten 52 linear entlang der Antriebsachse 30 des Aktuators bewegen kann. Das Magnetelement 52 stellt somit einen Magnetanker des Aktuators 22 bereit und der Aktuator 22 kann als Hubaktuator mit Magnetanker und einer Spule ausgebildet sein.

Das Magnetelement 52 ist wiederum mit einem Ende eines starren mechanischen Kopplungselements 38 der Kopplungsvorrichtung 26 gekoppelt. Das Kopplungselement 38 kann beispielsweise als Dickdraht und/oder Welle und/oder Stabelement ausgebildet sein.

Ein dem Magnetelement 52 gegenüberliegendes Ende des Kopplungselements 38 ist an einer der Trittfläche 21 entgegengesetzt angeordneten Innenfläche der Pedalplatte 20 über ein Verbindungselement 54 mit dem Signalelement 44 der Signalgebervorrichtung 24 verbunden. Das Signalelement 44 kann etwa als elastisches Plattenelement und/oder als Schwingplatte in der Pedalplatte 20 aufgenommen und/oder beweglich gelagert sein. Beispielsweise kann das Signalelement 44 eine in die Trittfläche 21 und/oder die Pedalplatte 20 integrierte elastische Membran aufweisen. Das Verbindungselement 54 ist dabei dreiecksförmig ausgestaltet, so dass eine durch den Aktuator 22 bewirkte Bewegung des Kopplungselements 38 in eine Bewegung des Signalelements 44 in einer Richtung der Trittfläche 21 umgelenkt wird, deren Richtungsvektor einen Hauptanteil in der Richtung parallel zum Normalenvektor aufweist.

Wird der Aktuator 22 mit Strom versorgt, etwa pulsierend bestromt, so führt dies zu einer periodischen Längsbewegung des Kopplungselements 38 entlang der Antriebsachse 30 des Aktuators 22 und damit zu einer Auslenkung des Signalelements 44. Dadurch kann der Auslenkungsrichtungsvektor auch eine Komponente entlang des Normalenvektors der Trittfläche 21 aufweisen. Das Signalelement 44 kann dadurch zu Vibrationen angeregt werden. Eine Federwirkung des Signalelements 44 kann einen Vibrationseffekt, insbesondere bei Ansteuerung im Resonanztakt des Signalelements 44, verstärken.

Neben dem Vibrationseffekt kann diese Ausführung eine Möglichkeit bieten, eine Auflage des Fußes des Fahrers auf der Pedalplatte 20 zu sensieren bzw. zu detektieren. Liegt der Fuß auf der Pedalplatte 20 so verschiebt dieser eine Lage des Magnetelements 52 aus dessen Ruhestellung und ändert damit eine Induktivität der Spule des Aktuators 22, was wiederum gemessen werden kann.

Fig. 3 zeigt einen Pedalkopf 19 mit Pedalplatte 20 eines Fahrpedalmoduls 10 gemäß einer weiteren Ausführungsform der Erfindung.

Ein Kopplungselement 38, welches als Dickdraht und/oder Welle und/oder Stabelement ausgeführt sein kann, ist mit einem Ende an einen Aktuator 22 und mit einem weiteren Ende an einen Kniehebel 56 gekoppelt. Der Aktuator 22 kann etwa einen linearen Antrieb, analog dem Aktuator 22 der Fig. 2, aufweisen. Auch kann der Aktuator 22 einen rotatorischen Antrieb aufweisen und als Exzentermotor ausgeführt sein, wobei eine Antriebsachse des Aktuators 22 in diesem Fall orthogonal zu einer Längserstreckungsrichtung des Kopplungselements 38 verlaufen kann, so dass eine exzentrische Rotationsbewegung des Aktuators 22 im Wesentlichen in eine Längsbewegung des Kopplungselements 38 übergeführt werden kann.

Der Kniehebel 56 ist um eine Schwenkachse 58 schwenkbar gelagert und weist einen bogenförmig und/oder knieförmig ausgebildeten Bereich 60 auf. Ein der Schwenkachse 58 gegenüberliegendes Ende eines Schenkels 62 des bogenförmigen Bereichs 60 ist mit dem Kopplungselement 38 verbunden, wobei das Kopplungselement 38 über ein an dem Schenkel 62 angeordnetes Schwenklager gelagert sein kann.

Weiter weist der Kniehebel 56 einen an eine der Trittfläche 21 entgegengesetzt angeordnete Innenfläche der Pedalplatte 20 angrenzenden Auslenkbereich 64 auf, welcher an ein Signalelement 44 der Signalgebervorrichtung 24 angrenzt. Das Signalelement 44 kann etwa als elastisches Plattenelement und/oder als Schwingplatte in der Pedalplatte 20 aufgenommen und/oder beweglich gelagert sein. Beispielsweise kann das Signalelement 44 eine in die Trittfläche 21 und/oder die Pedalplatte 20 integrierte elastische Membran aufweisen. Auch kann der Auslenkbereich 64 selbst das Signalelement 44 bilden bzw. können das Signalelement 44 und der Kniehebel 56 einstückig ausgebildet sein.

Über den Kniehebel 56 wird eine in einer Längserstreckungsrichtung des Kopplungselements 38 durch den Aktuator 22 bewirkte Kraft in eine auf das Signalelement 44 wirkende Kraft umgelenkt, welche im Wesentlichen parallel zu einem Normalenvektor der Trittfläche 21 wirkt. Dabei wird das Signalelement 44 relativ zur Pedalplatte 20 verlagert, was als haptisches Signal wahrnehmbar ist.

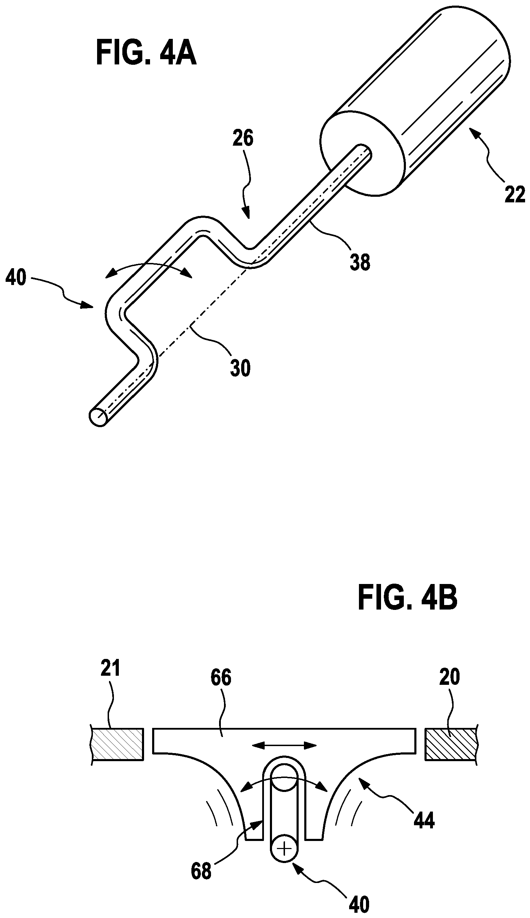

Fig. 4A zeigt einen Aktuator 22 mit einer Kopplungsvorrichtung 26 und Fig. 4B zeigt eine Signalgebervorrichtung 24 für ein Fahrpedalmodul 10 gemäß einer weiteren Ausführungsform der Erfindung.

Der Aktuator 22 ist als Schwenkaktuator ausgeführt, welcher periodische Schwenkbewegungen um einen gewissen Winkelbereich, etwa zwischen 0° und 120° ausführen kann.

An eine Antriebsachse 30 des Aktuators 22 ist ein Kopplungselement 38 der Kopplungsvorrichtung 26 gekoppelt, welches als Dickdraht und/oder als Welle und/oder als Stabelement ausgeführt sein kann.

Analog dem Kopplungselement 38 der Fig. 1 weist das Kopplungselement 38 der Fig. 4A einen U-förmig gebogenen Bereich 40 auf.

Als Signalelement 44 kann eine in der Pedalplatte 20 aufgenommene bzw. in die Trittfläche 21 integrierte Schwingplatte 66 dienen, wobei die Schwingplatte 66 eine Aufnahme 68 aufweist, in welcher der U-förmig gebogene Bereich 40 des Kopplungselements 38 beweglich aufgenommen ist. Wird des Kopplungselement 38 periodisch um eine Ruhelage über den Aktuator 22 verschwenkt, so führt dies zu periodischen Auslenkbewegungen der Schwingplatte parallel zur Trittfläche 21 und damit zu einem haptischen Signal.

Abschließend ist darauf hinzuweisen, dass Begriffe wie "aufweisend", "umfassend", etc. keine anderen Elemente ausschließen und Begriffe wie "eine" oder "ein" keine Vielzahl ausschließen. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Fahrpedalmodul (10) für ein Kraftfahrzeug, aufweisend:
eine Pedaleinheit (12) mit einem von einem Fahrer des Kraftfahrzeugs betätigbaren Pedalhebel (14), welcher an einem ersten Ende (17) eine Pedalplatte (20) aufweist und welcher an einem dem ersten Ende (17) gegenüberliegenden zweiten Ende (15) um eine Drehachse (11) drehbar gelagert ist;
eine Signalgebervorrichtung (24) an dem ersten Ende (17) zur haptischen Signalgebung an den Fahrer; und
einen Aktuator (22) zum Betätigen der Signalgebervorrichtung (24), wobei der Aktuator (22) an dem Pedalhebel (14) gehalten ist, der Aktuator (22) und die Signalgebervorrichtung (24) räumlich voneinander getrennt sind und der Aktuator (22) über eine starre mechanische Kopplungsvorrichtung (26) mit der Signalgebervorrichtung (24) gekoppelt ist, wobei der Aktuator (22) von der Drehachse (11) weniger beabstandet ist als die Signalgebervorrichtung (24),
**dadurch gekennzeichnet, dass**
ein Abstand (25) zwischen dem Aktuator (22) und einer Ebene (21), welche durch die Drehachse (11) und parallel zu einer Grundfläche (23) eines Pedalkörpers (16) der Pedaleinheit (12) verläuft, kleiner ist als ein Abstand (27) zwischen dem Aktuator (22) und der Signalgebervorrichtung (24),
wobei der Pedalhebel (14) drehbar und/oder schwenkbar um eine Drehachse (11) in dem Pedalkörper gelagert ist,
wobei die Grundfläche (23) eine Fläche des Fahrpedalmoduls bezeichnet, mit welcher das Fahrpedalmodul (10) beispielsweise an eine Karosserie des Kraftfahrzeugs abgestützt ist.

2. Fahrpedalmodul (10) gemäß Anspruch 1,
wobei die Kopplungsvorrichtung (26) eine Welle, einen Dickdraht und/oder ein Stabelement aufweist.

3. Fahrpedalmodul (10) gemäß einem der voranstehenden Ansprüche,
wobei die Kopplungsvorrichtung (26) einen Kniehebel (56) aufweist, welcher an ein Signalelement (44) der Signalgebervorrichtung (24) gekoppelt ist und welcher derart mit dem Aktuator (22) wirkverbunden ist, dass eine durch den Aktuator (22) in einer ersten Richtung bewirkte Kraft in eine in einer von der ersten Richtung verschiedenen zweiten Richtung wirkende weitere Kraft umgelenkt wird.

4. Fahrpedalmodul (10) gemäß Anspruch 3,
wobei der Kniehebel (56) an einer einer Trittfläche (21) der Pedalplatte (20) entgegengesetzt angeordneten Fläche der Pedalplatte (20) angrenzt.

5. Fahrpedalmodul (10) gemäß einem der voranstehenden Ansprüche,
wobei der Aktuator (22) einen rotatorischen und/oder linearen Antrieb aufweist.

6. Fahrpedalmodul (10) gemäß einem der voranstehende Ansprüche,
wobei der Aktuator (22) einen Elektromotor (28) und/oder einen Elektromagneten (50) aufweist.

7. Fahrpedalmodul (10) gemäß einem der voranstehenden Ansprüche,
wobei die Signalgebervorrichtung (24) ein relativ zum Pedalhebel (14) verlagerbares und über den Aktuator (22) an dem Pedalhebel (14) abgestütztes Signalelement (44) aufweist, welches dazu ausgeführt ist, ein für den Fahrer spürbares haptisches Signal zu erzeugen.

8. Fahrpedalmodul (10) gemäß Anspruch 7,
wobei das Signalelement (44) parallel und/oder orthogonal zu einem Normalenvektor einer Trittfläche (21) der Pedalplatte (20) verlagerbar ist.

9. Fahrpedalmodul (10) gemäß Anspruch 7 oder 8,
wobei das Signalelement (44) eine Exzentermasse (46), eine Federplatte und/oder ein elastisches Element aufweist.

10. Fahrpedalmodul (10) gemäß einem der voranstehenden Ansprüche,
wobei der Aktuator (22) eine Antriebsachse (30) aufweist, welche mit einem ersten Ende eines rotierbaren Kopplungselements (38) der Kopplungsvorrichtung (26) gekoppelt ist,
wobei an einem dem ersten Ende gegenüberliegenden zweiten Ende des Kopplungselements (38) eine Exzentermasse (46) exzentrisch zur Antriebsachse (30) angeordnet ist,
wobei das zweite Ende des Kopplungselements (38) an dem ersten Ende (17) des Pedalhebels (14) angeordnet ist.

## Claims

1. Accelerator pedal module (10) for a motor vehicle, having:
a pedal unit (12) with a pedal lever (14) which can be activated by a driver of the motor vehicle and which has a pedal plate (20) at a first end (17) and which is mounted at a second end (15) lying opposite the first end (17) so as to be rotatable about a rotational axis (11); a signal generator device (24) at the first end (17) for haptically signaling to the driver; and an actuator (22) for activating the signal generator device (24), wherein the actuator (22) is secured to the pedal lever (14), the actuator (22) and the signal generator device (24) are spatially separated from one another, and the actuator (22) is coupled to the signal generator device (24) via a rigid mechanical coupling device (26), wherein the actuator (22) is at a shorter distance from the rotational axis (11) than the signal generator device (24),
**characterized in that**
a distance (25) between the actuator (22) and a plane (21) which runs through the rotational axis (11) and which is parallel to a base surface (23) of a pedal body (16) of the pedal unit (12) is shorter than a distance (27) between the actuator (22) and the signal generator device (24),
wherein the pedal lever (14) is mounted so as to be rotatable and/or pivotable about a rotational axis (11) in the pedal body,
wherein the base surface (23) denotes a surface of the accelerator pedal module with which the accelerator pedal module (10) is supported, for example, on a body of the motor vehicle.

2. Accelerator pedal module (10) according to Claim 1,
wherein the coupling device (26) has a shaft, a thick wire and/or a rod element.

3. Accelerator pedal module (10) according to one of the preceding claims,
wherein the coupling device (26) has a toggle lever (56) which is coupled to a signal element (44) of the signal generator device (24) and which is operatively connected to the actuator (22) in such a way that a force which is brought about by the actuator (22) in a first direction is deflected into a further force acting in a second direction which is different from the first direction.

4. Accelerator pedal module (10) according to Claim 3,
wherein the toggle lever (56) adjoins a face of the pedal plate (20) which is arranged opposite a tread surface (21) of the pedal plate (20).

5. Accelerator pedal module (10) according to one of the preceding claims,
wherein the actuator (22) has a rotational and/or linear drive.

6. Accelerator pedal module (10) according to one of the preceding claims,
wherein the actuator (22) has an electric motor (28) and/or an electromagnet (50).

7. Accelerator pedal module (10) according to one of the preceding claims,
wherein the signal generator device (24) has a signal element (44) which can be moved relative to the pedal lever (14), is supported on the pedal lever (14) via the actuator (22) and is designed to generate a haptic signal which can be felt by the driver.

8. Accelerator pedal module (10) according to Claim 7,
wherein the signal element (44) can be moved in parallel and/or orthogonally with respect to a normal vector of a tread surface (21) of the pedal plate (20).

9. Accelerator pedal module (10) according to Claim 7 or 8,
wherein the signal element (44) has an eccentric mass (46), a spring plate and/or an elastic element.

10. Accelerator pedal module (10) according to one of the preceding claims,
wherein the actuator (22) has a drive axle (30) which is coupled to a first end of a rotatable coupling element (38) of the coupling device (26),
wherein, at a second end of the coupling element (38) lying opposite the first end, an eccentric mass (46) is arranged eccentrically with respect to the drive axle (30),
wherein the second end of the coupling element (38) is arranged at the first end (17) of the pedal lever (14).

## Revendications

1. Module de pédale d'accélérateur (10) pour un véhicule automobile, comprenant :
une unité de pédale (12) munie d'un levier de pédale (14) pouvant être actionné par un conducteur du véhicule automobile, lequel possède une plaque de pédale (20) à une première extrémité (17) et lequel est monté rotatif autour d'un axe de rotation (11) à une deuxième extrémité (15) à l'opposé de la première extrémité (17) ;
un dispositif transmetteur de signal (24) à la première extrémité (17) servant à une transmission de signal haptique au conducteur ; et
un actionneur (22) destiné à actionner le dispositif transmetteur de signal (24), l'actionneur (22) étant maintenu au niveau du levier de pédale (14), l'actionneur (22) et le dispositif transmetteur de signal (24) étant séparés l'un de l'autre dans l'espace et l'actionneur (22) étant couplé au dispositif transmetteur de signal (24) par le biais d'un dispositif de couplage (26) mécanique rigide, l'actionneur (22) étant moins éloigné de l'axe de rotation (11) que le dispositif transmetteur de signal (24),
**caractérisé en ce que**
un écart (25) entre l'actionneur (22) et un plan (21), lequel s'étend à travers l'axe de rotation (11) et parallèlement à une surface de base (23) d'un corps de pédale (16) de l'unité de pédale (12), est inférieur à un écart (27) entre l'actionneur (22) et le dispositif transmetteur de signal (24),
le levier de pédale (14) étant monté dans le corps de pédale de manière à pouvoir tourner et/ou pivoter autour d'un axe de rotation (11),
la surface de base (23) désignant une surface du module de pédale d'accélérateur avec laquelle le module de pédale d'accélérateur (10) prend appui contre une carrosserie du véhicule automobile, par exemple.

2. Module de pédale d'accélérateur (10) selon la revendication 1, le dispositif de couplage (26) possédant un arbre, un gros fil et/ou un élément tige.

3. Module de pédale d'accélérateur (10) selon l'une des revendications précédentes, le dispositif de couplage (26) possédant un levier à genouillère (56) qui est couplé à un élément de signal (44) du dispositif transmetteur de signal (24) et qui est en liaison fonctionnelle avec l'actionneur (22) de telle sorte qu'une force exercée par l'actionneur dans une première direction (22) est déviée en une force supplémentaire agissant dans une deuxième direction différente de la première direction.

4. Module de pédale d'accélérateur (10) selon la revendication 3, le levier à genouillère (56) étant adjacent d'une surface de la plaque de pédale (20) disposée à l'opposé d'une surface d'appui (21) de la plaque de pédale (20).

5. Module de pédale d'accélérateur (10) selon l'une des revendications précédentes, l'actionneur (22) possédant un mécanisme d'entraînement rotatif et/ou linéaire.

6. Module de pédale d'accélérateur (10) selon l'une des revendications précédentes, l'actionneur (22) possédant un moteur électrique (28) et/ou un électroaimant (50).

7. Module de pédale d'accélérateur (10) selon l'une des revendications précédentes, le dispositif transmetteur de signal (24) possédant un élément de signal (44) pouvant être déplacé par rapport au levier de pédale (14) et prenant appui sur le levier de pédale (14) par le biais de l'actionneur (22), lequel est conçu pour générer un signal haptique perceptible par le conducteur.

8. Module de pédale d'accélérateur (10) selon la revendication 7, l'élément de signal (44) pouvant être déplacé parallèlement et/ou orthogonalement par rapport à un vecteur normal d'une surface d'appui (21) de la plaque de pédale (20).

9. Module de pédale d'accélérateur (10) selon la revendication 7 ou 8, l'élément de signal (44) possédant une masse excentrique (46), une plaque-ressort et/ou un élément élastique.

10. Module de pédale d'accélérateur (10) selon l'une des revendications précédentes, l'actionneur (22) possédant un axe d'entraînement (30) qui est couplé à une première extrémité d'un élément de couplage (38) rotatif du dispositif de couplage (26), une masse excentrique (46) étant disposée de manière excentrique par rapport à l'axe d'entraînement (30) à une deuxième extrémité de l'élément de couplage (38) à l'opposé de la première extrémité, la deuxième extrémité de l'élément de couplage (38) étant disposée à la première extrémité (17) du levier de pédale (14).
